# EUROPEAN PATENT APPLICATION

(11) **EP 4 190 588 A1**
(43) Date of publication of application: **07.06.2023**
(21) Application number: 22209705.7
(22) Date of filing: 25.11.2022
(51) Int. Cl.: B60C 1/00, C08K 3/04, C08K 5/3415, C08L 7/00, C08L 9/06

(54) **TIRE BEAD INSULATION CONTAINING MALEIMIDE**

(30) Priority: 01.12.2021 US 202117457101
(71) Applicant: The Goodyear Tire & Rubber Company, Akron, OH 44316 (US)
(72) Inventor: SANDSTROM, Paul Harry, Cuyahoga Falls, 44223 (US); VAN ECK, Dirk Lothar Maria, 63110 Rodgau (DE)
(74) Representative: Kutsch, Bernd

(57) **Abstract**

A bead portion for incorporation in a tire is disclosed. The bead portion comprises bead wires and a rubber compound for surrounding and/or insulating the bead wires, the rubber compound comprising 80 to 150 phr of carbon black, from 0 to 50 phr silica, and from 0.5 to 5 phr of N, N'-m-phenylene bismaleimide. Also, a vulcanizable rubber composition for contacting bead wires is disclosed, the rubber composition comprising, based on 100 parts by weight of elastomer (phr): from 50 to 100 phr of at least one styrene-butadiene rubber (SBR); optionally a second rubber in a minority portion relative to the SBR; from 80 to 150 phr or 100 to 150 phr of carbon black; from 0 to 30 phr silica; and from 0.5 to 5 phr of a maleimide; wherein the rubber composition excludes a phenol formaldehyde resin. Finally, a pneumatic tire having such a bead portion is disclosed.

## Description

### Field of the Invention

The present disclosure relates to a rubber compound for tire bead insulation and is described with particular reference thereto. However, it is to be appreciated that the present exemplary embodiments are amenable for incorporation in other rubber products and for like applications.

### Background of the Invention

A tire is a composite of several components each having a specific purpose yet together functioning to produce the desired performance. Some tires contain a bead portion, which includes a rubbery bead insulation that surrounds and/or is interspersed between bead wires or cords. Adhesion of the bead insulation to the bead wires helps provide tire durability.

To impart adhesion, an in-situ resin is typically included in the rubber composition that is used for the bead insulation. However, certain resins (s.a., e.g., phenol formaldehyde resin) are becoming undesirable because of the environmental impact of such materials. The requisite stiffness would be lost if the resin is removed from the compound. Thus, there exists a need for a replacement material that imparts, without compromise, the properties of resin.

### Summary of the Invention

The invention relates to a bead portion in accordance with claim 1, to a rubber composition in accordance with claim 9, and to a tire in accordance with claim 15.

Dependent claims refer to preferred embodiments of the invention.

In a preferred aspect, the present invention is directed to a bead portion for incorporation into a tire. The bead portion comprises bead wires and a rubber compound for surrounding and/or insulating the wires.

The rubber compound comprises, based on 100 parts by weight of elastomer (phr):
(1) from 0 to 100 phr of at least one styrene-butadiene rubber;
(2) from 0 to 100 phr of a polyisoprene rubber selected from the group consisting of natural rubber or synthetic polyisoprene;
(3) from 80 to 150 phr of carbon black;
(4) from 0 to 50 phr silica;
(5) from 0.5 to 5 phr of N, N'-m-phenylene bismaleimide; and
(6) optionally no resin.

Another embodiment of the disclosure is directed to a vulcanizable rubber composition for insulating bead wires, the rubber composition comprises, based on 100 parts by weight of elastomer (phr):
(1) from 50 to 100 phr of at least one styrene-butadiene rubber (SBR);
(2) optionally a second rubber in a minority portion relative to the SBR;
(3) from 100 to 150 phr of carbon black;
(4) from 0 to 30 phr silica; and
(5) from 0.5 to 5 phr of a maleimide;
wherein the rubber composition excludes a phenol formaldehyde resin.

In one embodiment, the rubber composition is for use in a bead portion of a pneumatic tire.

### Detailed Description of Preferred Embodiments of the Invention

The present disclosure relates to an insulative rubber compound for a bead portion of a pneumatic tire but is not so limited. As used herein, a "bead portion" includes a bead core, bead filler, bead wires, and bead insulation. Bead filler, sometimes referred to as the bead apex, is surrounded by carcass ply and bead core. In one or more embodiments, bead core includes at least one inextensible material. Examples of inextensible materials include coiled rubberized steel wire, coiled high-elastic modulus organic cord such as aromatic polyamide fiber cord, wound tape-like material, and the like. In one embodiment, bead core includes one or more wires, oriented in either parallel or crisscross mesh orientation, to reinforce the rubber product. Bead insulation may surround and/or be interspersed between the cords. In one or more embodiments, the bead insulation is formed from a rubber compound (also referred to herein as "bead insulation compound") that adheres to the bead wire. This characteristic of the bead insulation compound may be referred to as bead wire adhesion.

In one or more embodiments, the bead insulation compound is characterized by an improved bead wire adhesion when compared to bead insulation compounds that include or do not include a resin.

As used herein, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art.

There is disclosed herein a bead portion for incorporation in a tire. The bead portion comprises:
(A) bead wires; and
(B) a rubber compound for surrounding and/or insulating the bead wires, the rubber compound comprising, based on 100 parts by weight of elastomer (phr):
   (1) from 0 to 100 phr of at least one styrene-butadiene rubber;
   (2) from 0 to 100 phr of a polyisoprene rubber selected from the group consisting of natural rubber or synthetic polyisoprene;
   (3) from 80 to 150 phr of carbon black;
   (4) from 0 to 50 phr of silica;
   (5) from 0.5 to 5 phr of N, N'-m-phenylene bismaleimide; and
   (6) optionally no resin.

### Rubber Elastomer

One or more embodiments of the disclosed rubber compound include one rubber polymer only. Other embodiments of the disclosed rubber compound include a blend of at least two rubbers.

In one contemplated embodiment, a rubber polymer includes at least styrene-butadiene rubber. In another embodiment, styrene butadiene rubber is the only polymer employed in the rubber compound. Styrene/butadiene copolymers include those prepared by aqueous emulsion polymerization and organic solvent solution polymerization.

In practice, an emulsion polymerization derived styrene/butadiene (E-SBR) may be used. By emulsion polymerization prepared E-SBR, it is meant that styrene and 1,3-butadiene are copolymerized as an aqueous emulsion. The bound styrene content can vary, for example, from 5 to 50 percent. Embodiments are contemplated in which an E-SBR has a medium to relatively high bound styrene content, namely, a bound styrene content of greater than 30 percent, such as, as an example only, from 30 to 50 percent. In another aspect of this invention, an E-SBR might be used having a medium to relatively low bound styrene content, namely, a bound styrene content of less than 30 percent, such as, as an example only, from 5 to 25 percent.

In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene-based rubbers for use in this invention.

A solution polymerization prepared SBR (S-SBR) is also contemplated, which typically has a bound styrene content in a range of 9 to 36 percent. However, in the preferred embodiment, an S-SBR has a bound styrene content of greater than 30 percent and, more preferably, greater than 34%.

The S-SBR can be conveniently prepared, for example, by organo lithium catalyzation in the presence of an organic hydrocarbon solvent.

In contemplated embodiments, the SBR can be one in a pair of elastomers or one in among at least three or more elastomers. In such embodiments, the SBR comprises the majority elastomer portion and a second and other elastomers comprise the minority elastomer portion. The SBR can be present in the rubber composition in an amount no less than 50 phr. In yet another example, the SBR may be present in an amount of from 50 phr to 100 phr and, more preferably, from 65 phr to 85 phr. Accordingly, a second elastomer and each additional elastomer in the rubber composition is optionally present in no more than 50 phr total.

In one embodiment, only one elastomer in a pair of at least two diene elastomers is derived from styrene and butadiene. Representative examples of other conjugated diene-based elastomers include elastomers comprised of at least one of cis 1,4-polyisoprene (natural and synthetic), cis 1,4-polybutadiene, medium vinyl polybutadiene having a vinyl 1,2-content in a range of 15 to 90 percent, isoprene/butadiene copolymers, and styrene/isoprene/butadiene terpolymers.

In one embodiment, cis 1,4-polybutadiene rubber (BR) may be used. Such BR can be prepared, for example, by organic solution polymerization of 1,3-butadiene. The BR may be conveniently characterized, for example, by having at least a 90 percent cis 1,4-content.

The cis 1,4-polyisoprene and cis 1,4-polyisoprene natural rubber are well known to those having skill in the rubber art. In practice, a second rubber polymer can includes a polyisoprene. In one embodiment, the polyisoprene can be present in a minority amount. In another embodiment, the polyisoprene can be present in a majority amount. In certain embodiments, the polyisoprene can be the the only polymer employed in the rubber compound. In practice, the preferred rubber or elastomers include polyisoprene (natural or synthetic) in some amount.

Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers.

Among the latter are acetylenes, for example, vinyl acetylene; olefins, for example, isobutylene, which copolymerizes with isoprene to form butyl rubber; vinyl compounds, for example, acrylic acid, acrylonitrile, which polymerize with butadiene to form NBR, methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether.

Specific examples of synthetic rubbers include neoprene (polychloroprene), polybutadiene (including cis-1,4-polybutadiene), polyisoprene (including cis-1,4polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers.

In one embodiment, no diene elastomer in the rubber composition is functionalized. In another embodiment, at least one diene elastomer is functionalized to react with a silica filler. Representative of functionalized elastomers are, for example, styrene/butadiene elastomers containing one or more functional groups comprise:
(A) amine functional group reactive with hydroxyl groups on said silica or precipitated silica,
(B) siloxy functional group, including end chain siloxy groups, reactive with hydroxyl groups on said silica or precipitated silica,
(C) combination of amine and siloxy functional groups reactive with hydroxyl groups on said silica or precipitated silica,
(D) combination of thiol and siloxy (e.g. ethoxysilane) functional groups reactive with hydroxyl groups on said silica or precipitated silica,
(E) combination of imine and siloxy functional groups reactive with hydroxyl groups on said silica or precipitated silica, and
(F) hydroxyl functional groups reactive with said silica or precipitated silica.

For the functionalized elastomers, representative of amine functionalized SBR elastomers are, for example, in-chain functionalized SBR elastomers mentioned in U.S. Pat. No. 6,936,669.

Representative of a combination of amino-siloxy functionalized SBR elastomers with one or more amino-siloxy groups connected to the elastomer is, for example, HPR355^{™} from JSR and amino-siloxy functionalized SBR elastomers mentioned in U.S. Pat. No. 7,981,966.

Representative styrene/butadiene elastomers end functionalized with a silane-sulfide group are, for example, mentioned in U.S. Pat. Nos. 8,217,103 and 8,569,409.

Organic solvent polymerization prepared tin coupled elastomers such as for example, tin coupled styrene/butadiene copolymers may also be used.

Tin coupled copolymers of styrene/butadiene may be prepared, for example, by introducing a tin coupling agent during the styrene/1,3-butadiene monomer copolymerization reaction in an organic solvent solution, usually at or near the end of the polymerization reaction. Such coupling of styrene/butadiene copolymers is well known to those having skill in such art.

In practice, it is usually preferred that at least 50 percent and more generally in a range of 60 to 85 percent of the Sn (tin) bonds in the tin coupled elastomers are bonded to butadiene units of the styrene/butadiene copolymer to create Sn-dienyl bonds such as butadienyl bonds.

Creation of tin-dienyl bonds can be accomplished in a number of ways such as, for example, sequential addition of butadiene to the copolymerization system or use of modifiers to alter the styrene and/or butadiene reactivity ratios for the copolymerization. It is believed that such techniques, whether used with a batch or a continuous copolymerization system, is well known to those having skill in such art.

Various tin compounds, particularly organo tin compounds, may be used for the coupling of the elastomer. Representative of such compounds are, for example, alkyl tin trichloride, dialkyl tin dichloride, yielding variants of a tin coupled styrene/butadiene copolymer elastomer, although a trialkyl tin monochloride might be used which would yield simply a tin-terminated copolymer.

Examples of tin-modified, or coupled, styrene/butadiene copolymer elastomers might be found, for example and not intended to be limiting, in U.S. Pat. No. 5,064,901.

### Oil

The rubber composition may include from 0 phr to 50 phr and, more preferably, from 0 to 30 phr of a processing oil. In one embodiment, the rubber composition excludes a processing oil. Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, and low PCA oils, such as MES, TDAE, and heavy naphthenic oils, vegetable oils such as sunflower, soybean, and safflower oils, and fatty acid monoesters.

### Maleimide

An important aspect of the present disclosure is the addition of a maleimide to the rubber composition. The rubber composition includes from 0.5 phr to 5 phr, and more preferably from 1 to 3 phr, of the maleimide.

In a preferred embodiment, the maleimide is N, N'-m-Phenylenediamaleimide, although others are contemplated. In some embodiments, this additive can be used to promote stiffness.

Uniquely, (reinforcement) resins such as in situ (i.e., reactive in situ) resins and other non-reactive resins are partially or fully excluded from the vulcanizable rubber composition. Such in-situ resins are typically used in a rubber composition and involve the reaction of a methylene acceptor and a methylene donor.

Such excluded methylene acceptor is (but is not limited to) resorcinol, resorcinolic derivatives, monohydric phenols and their derivatives, dihydric phenols and their derivatives, polyhydric phenols and their derivatives, unmodified phenol novolak resins, modified phenol novolak resin, phenol formaldehyde resin, resorcinol novolak resins and mixtures thereof.

Such excluded methylene donors are (but not limited to) hexamethylenetetramine, hexamethoxymethylmelamine (HMMM), hexaethoxymethylmelamine, imino-methoxymethyl-melamine, imino-isobutoxymethylmelamine, lauryloxymethylpyridinium chloride, ethoxy-methylpyridinium chloride trioxan hexamethoxymethylmelamine, and N-substituted oxymethylmelamines.

Such non-reactive resins which might be used in the rubber composition are (but are not limited to) coumarone-indene resin, petroleum hydrocarbon resin, terpene polymers, styrene-alphamethylstyrene resins, terpene phenol resin, dicyclopentiadiene resin, C5 resins, C9 resins, C5/C9 resins, rosin derived resins and copolymers and/or mixtures thereof.

### Filler

The vulcanizable rubber composition includes from 80 to 150 phr of a carbon black, and more preferably from 100 phr to 130 phr of carbon black. Commonly employed carbon blacks can be used as a conventional filler. Representative examples of such carbon blacks include N110, N121, N134, N220, N231, N234, N242, N293, N299, S315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

In practice, the disclosed composition can comprise a carbon black of grade N326, further characterized by a thickness surface area in a range between from 65 to 90 nm.

The vulcanizable rubber composition can optionally include up to 50 phr silica and/or other filler materials. The commonly employed siliceous pigments which may be used in the rubber compound include conventional pyrogenic and precipitated siliceous pigments (silica), although precipitated silicas are preferred. The conventional siliceous pigments preferably employed in this invention are precipitated silicas such as, for example, those obtained by the acidification of a soluble silicate, e.g., sodium silicate. Such conventional silicas might be characterized, for example, by having a BET surface area, as measured using nitrogen gas, preferably in the range of 40 to 600, and more usually in a range of 50 to 300 square meters per gram. The BET method of measuring surface area is described in the Journal of the American Chemical Society, Volume 60, Page 304 (1930). The conventional silica may also be typically characterized by having a dibutylphthalate (DBP) absorption value in a range of 100 to 400, and more usually 150 to 300. The conventional silica might be expected to have an average ultimate particle size, for example, in the range of 0.01 to 0.05 micron as determined by the electron microscope, although the silica particles may be even smaller, or possibly larger, in size.

Various commercially available silicas may be used, such as, only for example herein, and without limitation, silicas commercially available from PPG Industries under the Hi-Sil trademark with designations 210, 243, and 315; silicas available from Solvay, with, for example, designations of Z1165MP and Z165GR, and silicas available from Evonik with, for example, designations VN2 and VN3.

The rubber compound may contain other materials known in the art to further promote the desired properties of the bead portion. It is readily understood by those having skill in the art that the rubber composition would be compounded by methods generally known in the rubber compounding art, such as mixing the various sulfur-vulcanizable constituent rubbers with various commonly used additive materials that are conventional in the art of fabricating bead insulation.

The vulcanizable rubber composition can include a sulfur donor. Representative examples of sulfur donors include elemental sulfur (free sulfur), an amine disulfide, polymeric polysulfide and sulfur olefin adducts. Preferably, the sulfur-vulcanizing agent is elemental sulfur. The sulfur-vulcanizing agent may be used in an amount ranging from 2 to 10 phr, with a range of from 3 to 8 phr being preferred.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.2 to 2, preferably 1.4 to 1.7 phr. In another embodiment, combinations of a primary and a secondary accelerator might be used with the secondary accelerator being used in smaller amounts, such as from 0 to 0.5 phr, in order to activate and to improve the properties of the vulcanizate. Preferably, the primary accelerator is a sulfenamide, such as N-cyclohexyl-2-benzothiazolesulfenamide (CBS). Preferably, the second accelerator is zinc dimethyl di-thiocarbamate, zinc dibenzyl di-thiocarbamate or diphenyl guanidine.

Other known curatives may be used in conventional amounts.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

Vulcanization of the pneumatic tire of the present invention is generally carried out at conventional temperatures ranging from 100°C to 200°C. Preferably, the vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

As disclosed supra, the bead rubber composition may be incorporated in a bead portion of a pneumatic tire. The tire can be built, shaped, molded and cured by various methods which will be readily apparent to those having skill in such art.

The pneumatic tire of the present invention may be a race tire, passenger tire, aircraft tire, agricultural, earthmover, off-the-road, truck tire, and the like. Preferably, the tire is a passenger or truck tire. The tire may also be a radial or bias, with a radial being preferred.

The size of the bead core may also vary, for example, depending upon the type of tire and the load. There is also no limitation herein to the cross-sectional shape of the bead wire used in the bead portion. It may be square, round, triangular, flat or any other shape. Any number of bead wires may be used, depending on the type of the tire in which the bead is used. The bead wires may be of a number of different types. In certain embodiments, the wire or metal may be plated with a compatible metal such as bronze, brass, copper or other metal. The wire or metal may be steel or other materials. In one embodiment, the bead wire includes a steel wire plated with copper, brass or bronze. The wire may vary widely in diameter, depending on the type of rubber product that is being reinforced. In one embodiment, the diameter of the wire is from 0.005 up to 3/16^{th} inches. Various tire beads are described in U.S. Pat. Nos. 6105646, 6302175, 6447905, and 6840297.

In one or more embodiments, the bead core may be covered with a bead core cover, which may include a textile fabric and/or a rubber layer to prevent direct contact of the bead wire with a carcass ply. In other embodiments, the bead core may be only partially covered. The cover can be wound around the bead core in a single or multiple layer(s), so as to cover all the surface of the bead core. In one embodiment, the bead portion may include two or more bead cores.

The invention may be better understood by reference to the following examples in which the parts and percentages are by weight unless otherwise indicated.

### EXAMPLE 1

In this example, the effects on the performance of rubber compounds are illustrated for compounds comprising a high load of carbon black in combination with a m-phenylene bismaleimide, which replaces in-situ resin. Four experimental rubber compounds were prepared in a lab Banbury mixer following the recipes in Table 1, with all compounds containing varied amounts of resin and/or m-phenylene bismaleimide and otherwise identical amounts of additives in conventional amounts. Physical properties of the compounds were evaluated as indicated in Table 2.

A control rubber compound was prepared as Control sample A conventional reinforcement resin.

For the Experimental B, control A was modified to omit the resins.

For Experimental samples C and D, compound B was modified with the addition of m-phenylene bismaleimide at different amounts and no resin present.

The basic formulations are illustrated in the following Table 1, which is presented in parts per 100 parts by weight of elastomers (phr).

**TABLE 1**

| | | **Samples** | | |
|---|---|---|---|---|
| | **Control** | **Experimental** | | |
| | **A** | **B** | **C** | **D** |
| E-SBR¹ | 100 | 100 | 100 | 100 |
| Carbon Black | 125 | 125 | 125 | 125 |
| Reinforcing Resin A² | 2.76 | 0 | 0 | 0 |
| Reinforcing Resin B³ | 2.5 | 0 | 0 | 0 |
| Accelerator A⁴ | .25 | .25 | .25 | .25 |
| Accelerator B⁵ | 1.65 | 1.65 | 1.65 | 1.65 |
| Sulfur | 5 | 5 | 5 | 5 |
| Maleimide⁶ | 0 | 0 | 1.5 | 3 |

| | | | | |
|---|---|---|---|---|
| ¹Emulsion polymerized styrene butadiene rubber, 23.5% styrene content, Tg -55° C ²LIQ on HMMM on free flow silica ³Reactive Phenol Formaldehyde Resin ⁴diphenylguanidine (DPG) ⁵N-cyclohexyl-2-benzothiazolesulfenamide (CBS) ⁶N, N'-m-Phenylene bis-maleimide | | | | |

Various cured rubber properties of the Control sample A and the Experimental samples B-D are reported in the following Table 2.

**TABLE 2**

| | | **Samples** | | |
|---|---|---|---|---|
| | **Control** | **Experimental** | | |
| | **A** | **B** | **C** | **D** |
| **Stiffness, RPA at 100°C** | | | | |
| G', 1%, KPa | 11034 | 9274 | 11587 | 12690 |
| G' 10%, KPa | 3880 | 3755 | 3975 | 4102 |

| **Hysteresis, 10%, RPA at 100°C** | | | | |
|---|---|---|---|---|
| Tan Delta | .265 | .227 | .253 | .255 |

| **Stress/Strain** | | | | |
|---|---|---|---|---|
| Tensile Strength, MPa | 14.3 | 13.7 | 14.7 | 14.1 |
| Elongation at Break, % | 195 | 176 | 181 | 187 |
| Modulus at 50% Strain, MPa | 4.4 | 4.1 | 4.4 | 4.6 |
| Modulus at 100% Strain, MPa | 7.9 | 8.1 | 8.6 | 8.4 |

| **Instron Tear** | | | | |
|---|---|---|---|---|
| 100°C., N | 82 | 43 | 61 | 60 |
| **SBAT, 23°C.** | | | | |
| Load at Max, N | 1311 | 1012 | 1019 | 1080 |
| Aged 10 days @ 100°C. | 1038 | 705 | 1269 | 798 |

| **SBAT, 95°C.** | | | | |
|---|---|---|---|---|
| Load at Max, N | 866 | 620 | 828 | 801 |
| Aged 10 days @ 100°C. | 691 | 447 | 704 | 579 |

As can be seen in Table 2, the overall performance properties of the rubber compound C (utilizing high carbon black content in combination with m-phenylene bismaleimide) compared favorably with the performance properties of the Control A.

The Experimental Compound C demonstrates improved stiffness over the Control A. This is shown by higher RPA stiffness values at 1% and 10%, which is favorable and indicates that the disclosed compound will keep the hoop stiff and prevent wire movement in a bead bundle when the tire is moving. In contrast, Experimental Compound B, which has the resin removed from Control Compound A, shows a significant loss of stiffness at 1% and 10%, properties which are critical for a bead insulation compound. Experimental Compound D also displays significantly improved G' (at 1%) when compared to Control A.

Experimental Compound C also displays slightly higher modulus properties as measured by the stress/strain measurements. This RPA value for Tan Delta also indicates that Experimental Compound C has similar hysteresis (or rolling resistance performance) to Control A.

Experimental Compound C further displays a slightly lower tear (61) measured at 100°C compared to Control A, which has a tear value of 82.

The Experimental Compound C also showed similar bead wire adhesion over the Control A, as measured by SBAT (Adhesion to the Bronze Coated Bead Wire) at 23°C and adhesion after aging, as measured by SBAT at 95°C. The Experimental Compound B, which has the resin removed from Control Compound A, also shows a significant loss of adhesion at 23°C and 95°C, after the compounds were aged. Experimental Compound D also shows overall improved adhesion when compared to Compound B, which has no resin present.

It is therefore concluded that the addition of high carbon black content in combination with maleimide, such as m-phenylene bismaleimide, performs at the same level or better than conventional resin-containing compounds. It is furthermore concluded that a combination of high content carbon black and maleimide can be used to replace resin partially or fully.

It is hereby concluded that the presently disclosed rubber compounds are useful for bead insulation compounds when such compounds comprise a high carbon black content in combination with maleimide.

### EXAMPLE 2

In this example, the effects on the performance of rubber compounds are illustrated for compounds comprising a high load of carbon black in combination with a m-phenylene bismaleimide, which replaces in-situ resin. Four experimental rubber compounds were prepared in a lab Banbury mixer following the recipes in Table 3, with all compounds containing varied amounts of one or two elastomer materials. Physical properties of the compounds were evaluated as indicated in Table 4.

A control rubber compound was prepared as Control sample E using an SBR and a conventional reinforcement resin.

For the Experimental F, control E was modified with the addition of m-phenylene bismaleimide while omitting the resins.

For Experimental samples G and H, compound F was modified by replacing some of the SBR with natural rubber at different amounts.

The basic formulations are illustrated in the following Table 3, which is presented in parts per 100 parts by weight of elastomers (phr).

**TABLE 3**

| | | **Samples** | | |
|---|---|---|---|---|
| | **Control** | **Experimental** | | |
| | **E** | **F (same as C)** | **G** | **H** |
| E-SBR¹ | 100 | 100 | 75 | 50 |
| Natural Rubber | 0 | 0 | 25 | 50 |
| Carbon Black | 125 | 125 | 125 | 125 |
| Reinforcing Resin A² | 2.76 | 0 | 0 | 0 |
| Reinforcing Resin B³ | 2.5 | 0 | 0 | 0 |
| Accelerator A⁴ | .25 | .25 | .25 | .25 |
| Accelerator B⁵ | 1.65 | 1.65 | 1.65 | 1.65 |
| Sulfur | 5 | 5 | 5 | 5 |
| Maleimide⁶ | 0 | 1.5 | 1.5 | 1.5 |

| | | | | |
|---|---|---|---|---|
| ¹Emulsion polymerized styrene butadiene rubber, 23.5% styrene content, Tg -55°C ²LIQ on HMMM on free flow silica ³Reactive Phenol Formaldehyde Resin ⁴diphenylguanidine (DPG) ⁵N-cyclohexyl-2-benzothiazolesulfenamide (CBS) ⁶N, N'-m-Phenylene bis-maleimide | | | | |

Various cured rubber properties of the Control sample E and the Experimental samples F-H are reported in the following Table 4.

**TABLE 4**

| | | **Samples** | | |
|---|---|---|---|---|
| | **Control** | **Experimental** | | |
| | **E** | **F (same as C)** | **G** | **H** |
| **Processing** | | | | |
| Unc G' | 219 | 223 | 227 | 231 |

| **Tack** | | | | |
|---|---|---|---|---|
| **N** | 4.1 | 5.5 | 3.1 | 14.3 |

| **Stiffness, RPA511 at 100°C** | | | | |
|---|---|---|---|---|
| G', 1% | 13846 | 13780 | 14428 | 14710 |
| G'10%, | 4358 | 4506 | 4339 | 4123 |

| **Hysteresis, 10%, RPA at 100C** | | | | |
|---|---|---|---|---|
| Tan Delta | .271 | .251 | .258 | .272 |

| **Stress/Strai n** | | | | |
|---|---|---|---|---|
| Tensile Strength, MPa | 13.3 | 13.9 | 12.9 | 13.3 |
| Elongation at Break, % | 168 | 142 | 144 | 162 |
| Modulus at 100% Strain, MPa | 8.8 | 10.4 | 9.0 | 8.4 |

| **Instron Tear** | | | | |
|---|---|---|---|---|
| 100°C., N | 53 | 39 | 41 | 43 |

| **SBAT, 23°C.** | | | | |
|---|---|---|---|---|
| Load at Max, N | 1254 | 1115 | 1185 | 945 |
| Aged 10 days @ 100°C. | 1001 | 1147 | 1100 | 1188 |

| **SBAT, 95°C.** | | | | |
|---|---|---|---|---|
| Load at Max, N | 914 | 830 | 735 | 865 |
| Aged 10 days @ 100°C. | 744 | 633 | 541 | 772 |

As can be seen in Table 4, the overall performance properties of the rubber compound G (having at least two rubber polymers, high carbon black content, and m-phenylene bismaleimide) compared favorably with, or improved on, the performance properties of Control E and Experimental sample C ("F"), above.

It is therefore concluded that the addition of high carbon black content in combination with maleimide, such as m-phenylene bismaleimide, performs at the same level or better than conventional resin-containing compounds. It is furthermore concluded that a combination of high content carbon black and maleimide can be used to replace resin partially or fully.

It is hereby concluded that the presently disclosed rubber compounds are useful for tire treads when such compounds comprise a high carbon black content in combination with m-phenylene bismaleimide.

## Claims

1. A bead portion for incorporation in a tire, the bead portion comprising bead wires and a rubber compound for surrounding and/or insulating the bead wires, the rubber compound comprising 80 to 150 phr of carbon black, from 0 to 50 phr silica, and from 0.5 to 5 phr of maleimide, preferably N, N'-m-phenylene bismaleimide.

2. The bead portion of claim 1 wherein the rubber compound comprises, based on 100 parts by weight of elastomer (phr), from 0 to 100 phr of at least one styrene-butadiene rubber (SBR) and/or from 0 to 100 phr of a polyisoprene rubber selected from the group consisting of natural rubber or synthetic polyisoprene, wherein at least one of said rubbers is comprised in that rubber composition.

3. The bead portion of claim 1 or 2 wherein the rubber compound comprises, based on 100 parts by weight of elastomer (phr), from 25 to 100 phr, preferably 50 to 100 phr, of at least one styrene-butadiene rubber (SBR) and/or from 0 to 75 phr, preferably 10 to 50 phr, of a polyisoprene rubber selected from the group consisting of natural rubber or synthetic polyisoprene.

4. The bead portion of at least one of the previous claims wherein the rubber compound excludes resins or reactive phenol formaldehyde resin.

5. The bead portion of at least one of the previous claims wherein the SBR is emulsion polymerized (ESBR).

6. The bead portion of at least one of the previous claims wherein the rubber compound comprises from 100 to 150 phr, preferably 115 to 125 phr, of carbon black.

7. The bead portion of at least one of the previous claims, wherein the carbon black has a thickness surface area in a range between from 65 to 90 nm and/or wherein the carbon black is grade N326.

8. The bead portion of at least one of the previous claims, wherein the rubber compound comprises from 70 to 80 phr of the styrene-butadiene rubber (SBR) and from 20 to 30 phr of the polyisoprene rubber.

9. A vulcanizable rubber composition for contacting bead wires, the rubber composition comprising, based on 100 parts by weight of elastomer (phr):
(A) from 50 to 100 phr of at least one styrene-butadiene rubber (SBR);
(B) optionally a second rubber in a minority portion relative to the SBR;
(C) from 80 to 150 phr or 100 to 150 phr of carbon black;
(D) from 0 to 30 phr silica; and
(E) from 0.5 to 5 phr of a maleimide;
wherein the rubber composition excludes a phenol formaldehyde resin.

10. The rubber composition of claim 9, wherein the maleimide is N, N'-m-phenylene bismaleimide.

11. The rubber composition of claim 9 and 10, wherein the second rubber comprises from 0 to 50 phr or 15 to 35 phr of a polyisoprene.

12. The rubber composition of at least of one of the claims 9 to 11, wherein the rubber composition excludes all resins.

13. The rubber composition of at least of one of the claims 9 to 12, wherein the SBR is emulsion polymerized SBR (ESBR).

14. The rubber composition of at least of one of the claims 9 to 13 wherein a ratio of SBR to the second rubber is 3:1 phr and/or the amount of carbon black is from 115 to 125 phr.

15. A pneumatic tire having a bead portion comprising bead wires, wherein
(i) the bead portion is in accordance with at least one of claims 1 to 9; or
(ii) there is a rubber composition in contact with the bead wires in accordance with at least one of the claims 10 to 14.
